# EUROPEAN PATENT SPECIFICATION

(11) **EP 2 637 823 B1**
(45) Date of publication and mention of the grant of the patent: **30.07.2014**
(21) Application number: 11775754.2
(22) Date of filing: 19.10.2011
(51) Int. Cl.: B24B 39/00, C22F 1/10

(54) **SHOT PEENING IN COMBINATION WITH A HEAT TREATMENT**
KUGELSTRAHLEN IN KOMBINATION MIT EINER WÄRMEBEHANDLUNG
NETTOYAGE PAR GRENAILLAGE ASSOCIÉ À UN TRAITEMENT THERMIQUE

(30) Priority: 08.11.2010 EP 10190345
(43) Date of publication of application: 18.09.2013
(73) Proprietor: Siemens Aktiengesellschaft, 80333 München (DE)
(72) Inventor: AHMAD, Fathi, 41564 Kaarst (DE); ESSER, Winfried, 44805 Bochum (DE)
(86) International application number: PCT/EP2011/068219
(87) International publication number: WO 2012/062545

(56) References cited:
- EP-A1- 1 595 968
- WO-A2-01/90433
- US-A- 4 512 817
- US-A1- 2006 157 165

## Description

The invention relates to shot peening of a component which is heat treated. (See for example WO 01/90433 A2).

Turbine blades receive as an additional safety margin the application of a shot peening procedure on the machined blade root. The current manufacturing procedure follows the following steps:
Blade root grinding -> Blade coating -> Bonding and final aging heat treatment -> Shot peening.

This manufacturing procedure (except root grinding) is repeated at refurbishment after each service operation period. Due to part lifetime concepts, it is possible for some parts not to be refurbished during the whole operation lifetime.
The lifetime of rotating metallic component is sometimes limited by the root.

Therefore it is the aim of the invention to solve the problem given above.
The problem is solved by a method according to claim 1.

In the further dependent claims there are other methods steps listed which can be used to further improve the invention. The dependent claims can arbitrarily mixed with each other to yield further advantages.

It shows:
- Figure 1: a turbine blade,
- figure 2: a gas turbine,
- figure 3: a list of super alloys.

The description and the figures are only examples of the invention.

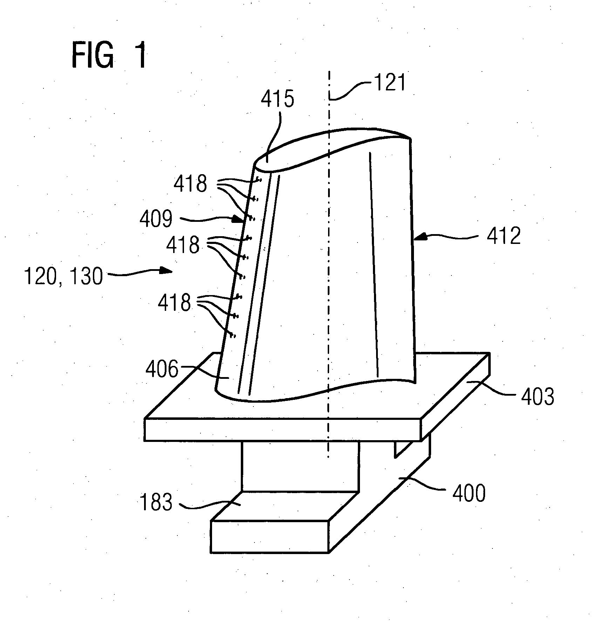

Figure 1 shows a perspective view of a rotor blade 120 or guide vane 130 of a turbomachine, which extends along a longitudinal axis 121.

The turbomachine may be a gas turbine of an aircraft or a turbine 100 of a power plant for generating electricity, a steam turbine or a compressor.

The blade or vane 120, 130 has, in succession along the longitudinal axis 121, a securing region 400, an adjoining blade or vane platform 403 and a main blade or vane part 406 as well as a blade or vane tip 415.
As a guide vane 130, the vane 130 may have a further platform (not shown) at its vane tip 415.

A blade or vane root 183, which is used to secure the rotor blades 120, 130 to a shaft or disk (not shown), is formed in the securing region 400.
The blade or vane root 183 is designed, for example, in hammerhead form. Other configurations, such as a fir-tree or dovetail root, are possible.
The blade or vane 120, 130 has a leading edge 409 and a trailing edge 412 for a medium which flows past the main blade or vane part 406.

In the case of conventional blades or vanes 120, 130, by way of example solid metallic materials, in particular superalloys, are used in all regions 400, 403, 406 of the blade or vane 120, 130.

Superalloys of this type are known, for example, from EP 1 204 776 B1, EP 1 306 454, EP 1 319 729 A1, WO 99/67435 or WO 00/44949.

The blade or vane 120, 130 may in this case be produced by a casting process, also by means of directional solidification, by a forging process, by a milling process or combinations thereof.

Workpieces with a single-crystal structure or structures are used as components for machines which, in operation, are exposed to high mechanical, thermal and/or chemical stresses. Single-crystal workpieces of this type are produced, for example, by directional solidification from the melt. This involves casting processes in which the liquid metallic alloy solidifies to form the single-crystal structure, i.e. the single-crystal workpiece, or solidifies directionally.
In this case, dendritic crystals are oriented along the direction of heat flow and form either a columnar crystalline grain structure (i.e. grains which run over the entire length of the workpiece and are referred to here, in accordance with the language customarily used, as directionally solidified) or a single-crystal structure, i.e. the entire workpiece consists of one single crystal. In these processes, a transition to globular (polycrystalline) solidification needs to be avoided, since non-directional growth inevitably forms transverse and longitudinal grain boundaries, which negate the favorable properties of the directionally solidified or single-crystal component.
Where the text refers in general terms to directionally solidified microstructures, this is to be understood as meaning both single crystals, which do not have any grain boundaries or at most have small-angle grain boundaries, and columnar crystal structures, which do have grain boundaries running in the longitudinal direction but do not have any transverse grain boundaries. This second form of crystalline structures is also described as directionally solidified microstructures (directionally solidified structures). Processes of this type are known from US A 6,024,792 and EP 0 892 090 A1.

The blades or vanes 120, 130 may likewise have coatings protecting against corrosion or oxidation, e.g. MCrAlX (M is at least one element selected from the group consisting of iron (Fe), cobalt (Co), nickel (Ni), X is an active element and represents yttrium (Y) and/or silicon and/or at least one rare earth element, or hafnium (Hf)). Alloys of this type are known from EP 0 486 489 B1, EP 0 786 017 B1, EP 0 412 397 B1 or EP 1 306 454 A1.
The density is preferably 95% of the theoretical density.
A protective aluminum oxide layer (TGO = thermally grown oxide layer) forms on the MCrAlX layer (as an intermediate layer or an outermost layer).

It is also possible for a thermal barrier coating, consisting for example of ZrO₂, Y₂O₃-ZrO₂, i.e. unstabilized, partially stabilized or fully stabilized by yttrium oxide and/or calcium oxide and/or magnesium oxide, which is preferably the outermost layer, to be present on the MCrAlX.
The thermal barrier coating covers the entire MCrAlX layer. Columnar grains are produced in the thermal barrier coating by means of suitable coating processes, such as for example electron beam physical vapor deposition (EB-PVD).
Other coating processes are conceivable, for example atmospheric plasma spraying (APS), LPPS, VPS or CVD. The thermal barrier coating may include porous grains which have microcracks or macrocracks for improving its resistance to thermal shocks. The thermal barrier coating is therefore preferably more porous than the MCrAlX layer.

The blade or vane 120, 130 may be hollow or solid in form. If the blade or vane 120, 130 is to be cooled, it is hollow and may also have film-cooling holes 418 (indicated by dashed lines).

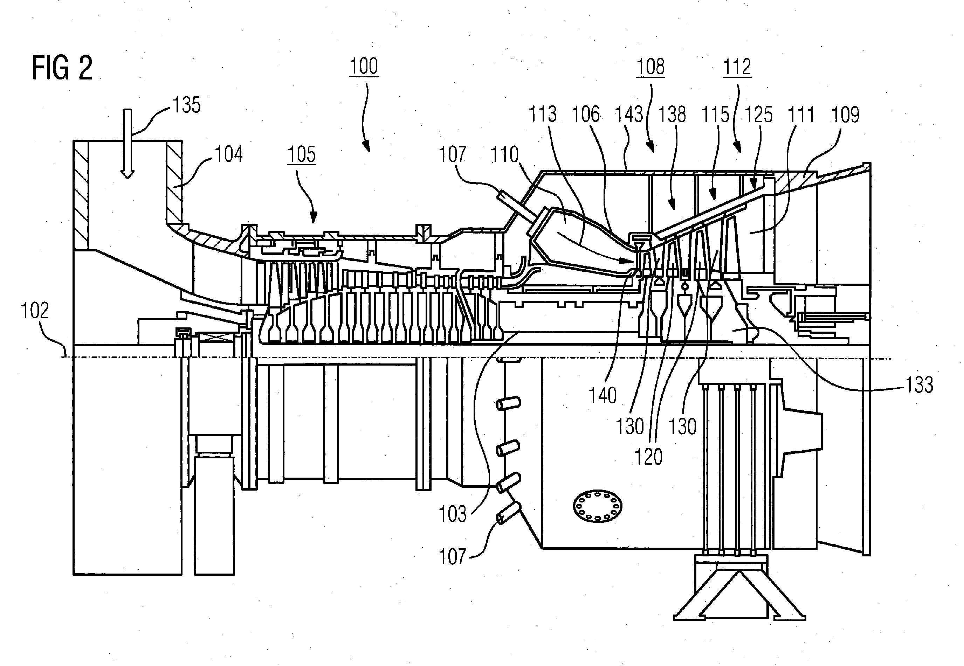

Figure 2 shows, by way of example, a partial longitudinal section through a gas turbine 100.

In the interior, the gas turbine 100 has a rotor 103 which is mounted such that it can rotate about an axis of rotation 102, has a shaft 101 and is also referred to as the turbine rotor.
An intake housing 104, a compressor 105, a, for example, toroidal combustion chamber 110, in particular an annular combustion chamber, with a plurality of coaxially arranged burners 107, a turbine 108 and the exhaust-gas housing 109 follow one another along the rotor 103.
The annular combustion chamber 110 is in communication with a, for example, annular hot-gas passage 111, where, by way of example, four successive turbine stages 112 form the turbine 108.
Each turbine stage 112 is formed, for example, from two blade or vane rings. As seen in the direction of flow of a working medium 113, in the hot-gas passage 111 a row of guide vanes 115 is followed by a row 125 formed from rotor blades 120.

The guide vanes 130 are secured to an inner housing 138 of a stator 143, whereas the rotor blades 120 of a row 125 are fitted to the rotor 103 for example by means of a turbine disk 133.
A generator (not shown) is coupled to the rotor 103.

While the gas turbine 100 is operating, the compressor 105 sucks in air 135 through the intake housing 104 and compresses it. The compressed air provided at the turbine-side end of the compressor 105 is passed to the burners 107, where it is mixed with a fuel. The mix is then burnt in the combustion chamber 110, forming the working medium 113. From there, the working medium 113 flows along the hot-gas passage 111 past the guide vanes 130 and the rotor blades 120. The working medium 113 is expanded at the rotor blades 120, transferring its momentum, so that the rotor blades 120 drive the rotor 103 and the latter in turn drives the generator coupled to it.

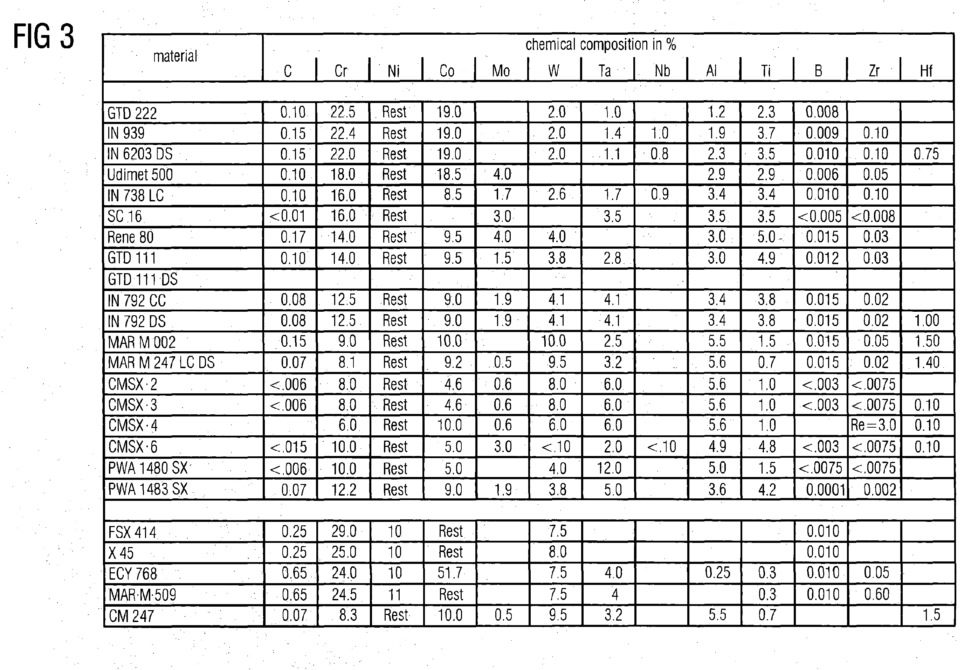

While the gas turbine 100 is operating, the components which are exposed to the hot working medium 113 are subject to thermal stresses. The guide vanes 130 and rotor blades 120 of the first turbine stage 112, as seen in the direction of flow of the working medium 113, together with the heat shield bricks which line the annular combustion chamber 110, are subject to the highest thermal stresses.
To be able to withstand the temperatures which prevail there, they can be cooled by means of a coolant.
Substrates of the components may likewise have a directional structure, i.e. they are in single-crystal form (SX structure) or have only longitudinally oriented grains (DS structure).
By way of example, iron-based, nickel-based or cobalt-based superalloys especially one of figure 3 are used as material for the components, in particular for the turbine blade or vane 120, 130 and components of the combustion chamber 110. Superalloys of this type are known, for example, from EP 1 204 776 B1, EP 1 306 454, EP 1 319 729 A1, WO 99/67435 or WO 00/44949.

The guide vane 130 has a guide vane root (not shown here) facing the inner housing 138 of the turbine 108 and a guide vane head at the opposite end from the guide vane root. The guide vane head faces the rotor 103 and is fixed to a securing ring 140 of the stator 143.

A shot peening process produces plastic deformation and surface compressive stresses up to a certain depth into the substrate, which is especially at the root of blade (firtree surface) performed. The positive effect is that residual compressive stresses eliminate potential residual tensile stresses caused by the root machining and partially compensate the tensile stresses during the engine operation. After the first operation interval and during refurbishment, the blade typically gets a new coating including a bonding heat treatment and the root one more shot peening. By this heat treatment typically the former plastically deformed zone of the firtree recrystallizes and becomes a zone of fine grains.
By the new shot shot peening this fine grain zone is plastically deformed again and has residual compressive stresses.
Positive effects: a.) fine grained structures have a higher HCF endurance limit than coarse grained structures and b.) residual compressive stresses.
Blades are allowed having 3 times shot peening during the total part lifetime.

The blade roots which got the first shot peening as new part get a zone of small grain sizes in the external blade root especially only at the surface when the heat treatment in refurbishment takes place.

It is suggested to have preferably he following procedure for blade root treatment as new part (this listing is not closing):
blade root grinding -> blade coating -> shot peening -> bonding and/or final aging heat treatment -> shot peening or
blade root grinding -> shot peening -> blade coating -> bonding and/or final aging heat treatment -> shot peening or
final aging heat treatment -> blade root grinding -> shot peening -> blade coating -> bonding heat treatment -> shot peening or
final aging heat treatment -> blade root grinding -> blade coating -> shot peening -> bonding heat treatment -> shot peening.

With this procedure it is possible for new parts to be in the engine for longer operation hours without increased crack initiation risk. This is due to the fact that fine grained structures have a higher yield strength than coarse grained structures (at root operating temperatures) so crack initiation is delayed and in case of a crack initiation, its propagation within the fine grained size surface layer will be relatively slower than in a coarse grained structure.

### Positive Effects:

- Lower risk for crack initiation
- Slower crack propagation within the recrystallization region.

## Claims

1. Method to produce a new metallic component,
especially a new metallic casted component,
wherein at least one heat treatment with the metallic component is performed,
wherein a first shot peening of the component is performed before a heat treatment,
wherein after the heat treatment a second or further shot peening is performed,
wherein the heat treatment is a bonding heat treatment and/or an aging heat treatment,
**characterized in that** the component is partially coated before the first shot peening,
especially coated with a metallic coating and/or ceramic coating.

2. Method according to claim 1,
wherein only a part of the component is shot peened, especially outside the coated area.

3. Method according to any of the preceeding claims,
wherein the component is a turbine blade and the shot peened area is the root of the blade.

4. Method according to any of the preceeding claims,
wherein a fine grained structure is yielded, especially only at the surface.

5. Method according to any of the preceeding claims,
where the heat treatment is the first heat treatment after coating the metallic component.

## Patentansprüche

1. Verfahren zum Herstellen einer neuen metallischen Komponente, insbesondere einer neuen metallischen gegossenen Komponente, wobei die metallische Komponente mindestens einer Wärmebehandlung unterzogen wird,
wobei ein erstes Kugelstrahlen der Komponente vor einer Wärmebehandlung durchgeführt wird,
wobei nach der Wärmebehandlung ein zweites oder weiteres Kugelstrahlen durchgeführt wird,
wobei die Wärmebehandlung eine Anbindungswärmebehandlung und/oder eine Alterungswärmebehandlung ist,
**dadurch gekennzeichnet, dass** die Komponente vor dem ersten Kugelstrahlen teilweise beschichtet wird, insbesondere mit einer metallischen Beschichtung und/oder keramischen Beschichtung beschichtet wird.

2. Verfahren nach Anspruch 1, wobei nur ein Teil der Komponente einer Kugelbestrahlung unterzogen wird, insbesondere außerhalb des beschichteten Bereichs.

3. Verfahren nach einem der vorhergehenden Ansprüche, wobei die Komponente eine Turbinenschaufel ist und der kugelbestrahlte Bereich der Fuß der Schaufel ist.

4. Verfahren nach einem der vorhergehenden Ansprüche, wobei eine feinkörnige Struktur erhalten wird, insbesondere nur an der Oberfläche.

5. Verfahren nach einem der vorhergehenden Ansprüche, wobei die Wärmebehandlung die erste Wärmebehandlung nach Beschichtung der metallischen Komponente ist.

## Revendications

1. Procédé de production d'une pièce métallique neuve,
en particulier d'une pièce métallique coulée neuve,
dans lequel on effectue au moins un traitement thermique sur la pièce métallique,
dans lequel on effectue un premier grenaillage de la pièce avant un traitement thermique,
dans lequel on effectue après le traitement thermique un deuxième ou un autre grenaillage,
dans lequel le traitement thermique est un traitement thermique de liaison et/ou un traitement thermique de vieillissement,
**caractérisé en ce que** on revêt partiellement la pièce avant le premier grenaillage,
en la revêtant en particulier d'un revêtement métallique et/ou d'un revêtement céramique.

2. Procédé suivant la revendication 1, dans lequel on grenaille seulement une partie de la pièce, en particulier à l'extérieur de la zone revêtue.

3. Procédé suivant l'une quelconque des revendications précédentes, dans lequel la pièce est une aube de turbine et la zone grenaillée est la racine de l'aube.

4. Procédé suivant l'une quelconque des revendications précédentes, dans lequel on obtient une structure à grains fins, en particulier seulement à la surface.

5. Procédé suivant l'une quelconque des revendications précédentes, dans lequel le traitement thermique est le premier traitement thermique après avoir revêtu la pièce métallique.
